# EUROPEAN PATENT APPLICATION

(11) **EP 4 585 408 A1**
(43) Date of publication of application: **16.07.2025**
(21) Application number: 25150620.0
(22) Date of filing: 08.01.2025
(51) Int. Cl.: B30B 9/02, B30B 9/22, C12G 1/00, C12G 1/02, A23B 2/10

(54) **IMPROVED DE-OXIDATION METHOD AND APPARATUS**

(30) Priority: 11.01.2024 IT 202400000441
(71) Applicant: Noform S.r.l., 30020 Meolo (VE) (IT)
(72) Inventor: CROSATO, Remo, 30020 MEOLO (IT)
(74) Representative: Citron, Massimiliano

(57) **Abstract**

A deoxidation method performed on a vegetable mass contained in a container is described, with the steps of
(i) injecting an inert gas into the container while preventing the inert gas from coming out of the container, so that the inert gas increases the gaseous pressure inside the container, bringing it to a first pressure value;
(ii) decreasing the gaseous pressure inside the container bringing it to a second pressure value lower than the first value by extracting a mixture of inert gas and air from the container and thus removing oxygen from the vegetable mass.

## Description

The present invention relates to an improved method and apparatus for deoxidation food processing, e.g. for winemaking, and also to a container for storing a vegetable mass and carrying out the method. In particular the present invention relates to an improved method of pneumatic pressing, and also to a closed pneumatic press for obtaining a vegetable juice and carrying out the method. Preferably the press and the method are used for pressing whole grapes, destemmed grapes or pomace from the end of fermentation.

The well-known pneumatic pressing presses, taken here as an example, consist of a drum rotating about its central horizontal axis. If the drum is closed, the press is defined "closed", and requires drainage channels or septa for the separation of the liquid juice from the peel.

Musts from white or red grapes processed in white, namely destemmed and/or pressed before the alcoholic fermentation process, are very sensitive to the presence of oxygen, that is, they tend to oxidize very quickly when the liquid and/or pulp of the grape come into contact with air. The use of a closed-drum press is aimed at limiting or avoiding the oxidation of the crushed white or red grapes and therefore of the must resulting from the draining/pressing process in the closed press.

In fact, to reduce and/or avoid the oxidation of the must obtained from pressing, an inert gas is injected into the closed press, or into the mass during loading. The gas introduced into the press immediately exits from a valve, thus dragging the air out of the press. However, this technique is not able to eliminate the air/oxygen bubbles trapped inside the mass, nor is it able to remove the oxygen dissolved in the must and pulp. Therefore, the deoxidizing effect on the mass inside the press is merely superficial and aimed at preventing the must from further oxidizing due to contact with the air present in the empty and unfilled space of the press.

The main object of the invention, defined in the attached claims, is to improve the current state of the art.

Another object of the invention is to achieve an improved winemaking method.

Particular object of the invention is to provide an improved pneumatic press and pressing method.

Advantageous technical features are defined in the dependent claims.

One aspect of the invention is a deoxidation method, e.g. during the winemaking process, performed on a vegetable mass contained in a container, with the steps of
(i) injecting an inert gas into the container while preventing the gas from escaping from the container, so that the inert gas increases the gas pressure inside the container bringing it to a first pressure value;
(ii) decreasing the pressure inside the container bringing it to a second pressure value lower than the first value by extracting from the container a mixture of inert gas and air (composed of approximately 20% oxygen and the remaining % nitrogen), thus removing oxygen from the vegetable mass.

The second pressure value may be lower than atmospheric pressure (zero relative bar) or higher, as long as it is lower than the pressure inside the container obtained with step (i).

Such steps (i) and (ii) may also be temporally inverted. If the first step performed is step (i), then preferably gas is injected inside the container reaching a positive pressure threshold, that is, above atmospheric pressure; if the first step becomes step (ii), the pressure inside the container will be brought to a value lower than atmospheric pressure.

The increase in pressure of the inert gas inside the container forces it to penetrate deep into the vegetable mass, where it reaches and invades the interstices of the vegetable mass, diluting the oxygen present in the interstices. During the extraction of gas from the container, one is able to extract a mixture of inert gas, nitrogen and oxygen contained in the air, thus removing oxygen from the vegetable mass.

On the other hand, if the process is reversed, first the air present in the interstices of the mass is removed, and then these interstices and the empty space are filled with injected inert gas.

Since the vegetable mass acts as a barrier to the mixing of the gas, the introduction of inert gas, inserted as a flow inside or above the mass (like in the aforementioned prior art), has the effect of removing at most only the oxygen above and outside the vegetable mass. The oxygen inside the vegetable mass instead remains where it is, and will oxidize the must as soon as the grapes begin to be pressed. Instead, the introduction of inert gas and the extraction of the resulting mixture of introduced inert gas and residual air present in the container and in the mass (or vice versa) allows the oxygen to be extracted from inside the vegetable mass, diluting it more and more as steps (i) and (ii) are cyclically performed.

Preferably the first pressure value is greater than the ambient atmospheric pressure.

Preferably, step (i) occurs by involving and/or permeating the entire vegetable mass so that the inert gas invades interstices of the vegetable mass and dilutes the oxygen present in the interstices.

That is, carrying out steps (i) and (ii) has the effect of removing oxygen from the interstices of the entire vegetable mass and saturating them with the inert gas introduced.

Note that the reduction in pressure in step (ii) causes the air bubbles inside the interstices of the vegetable mass to increase in volume causes and the gas (injected inert gas and air) dissolved in the must to return to the gaseous phase. Since the Archimedean thrust depends on the volume of the bubble, it will tend to rise to the surface of the vegetable mass much more easily, favoring its removal. Furthermore, since the solubility of gases in the must is directly proportional to the absolute pressure, the lowering of the pressure will allow any gas in solution to return to the gaseous phase and join the bubbles already present. These bubbles will further increase in size, and will tend to overcome the surface tension of the liquid, flowing between the solid parts of the crushed grapes until they reach the surface. Along their path they can incorporate smaller bubbles, also allowing these to be extracted from the mass.

In essence, in step (ii) the inert gas pressurized in the vegetable mass will come out therefrom dragging with itself part of the residual oxygen, progressively reducing the remaining oxygen in the vegetable mass.

Another step (i) after step (ii) causes the inert gas to enter the vegetable mass to replace the oxygen extracted in the previous step (ii) and re-equalize the pressure, mixing with and diluting the oxygen still present inside the vegetable mass.

Let T1 be the duration of step (i), T3 the duration of step (ii) and T2 and T4 respectively the times for maintaining the pressure at the set value; steps (i) and (ii) preferably follow one another alternately according to the sequence T1, T2, T3 and T4, which together form a single cycle. At the end of T4 a new cycle starts with T1.

The pressure level reached in steps (i) and (ii) depends on the type of grape or crushed grape and on the level of deoxygenation and inertization that one wants to achieve, while the duration of the times mentioned above depends on the volume of the container. For example, for a 100 hl tank containing crushed white grapes such as glera, from which the must of Prosecco wine is obtained, one can perform a pressurization with inert gas at +700 mbar with T1 = 2 minutes, then T2 = 1 minute, then a depressurization to -350 mbar for T3 = 3 minutes, and then a maintenance time at this depressurization of T4 = 1 minute. Total cycle time: 7 minutes.

Experimentally it has been seen that the method allows, in a few cycles of alternating steps (i) and (ii) (preferably 3 to 5 cycles), to reduce the oxygen in the whole grape mass to a few percentage points (below 5%).

Preferably said first value is between +0.2 bar and +1.5 bar of pressurization, more preferably between +0.3 bar and +1 bar. Said second value is e.g. 0 bar or slightly above 0 bar, e.g. +0.1 bar. These values represent the difference with the ambient atmospheric pressure (i.e. the pressure outside the container or inside it if it has been loaded or is being loaded with the loading hatch or a vent valve open), or the pressure difference between the first and second values.

The method works even better if the second value induces a depression inside the container (negative pressure compared to atmospheric pressure), that is, if the said second value is preferably between -0.5 bar and -0.2 bar, more preferably between -0.4 bar and -0.3 bar, even more preferably -0.35 bar. In this way, it is possible to reduce the number of cycles and the quantity of inert gas to be used to obtain the same decrease in oxygen in the vegetable mass.

Preferably, steps (i) and (ii) follow one another in alternating cycles.

Preferably the method is carried out in a pneumatic press adapted to press the vegetable mass.

Another aspect of the invention is a method for operating a pneumatic press, the press comprising:
a drum or cylinder for containing a vegetable mass,
a filtering septum mounted inside the drum and connected to the outside of the drum in order to extract liquid from the vegetable mass and convey the liquid to the outside of the drum,
an inflatable membrane mounted on the inner wall of the drum to push the vegetable mass against the filter septum and extract liquid from the vegetable mass by pushing it out of the drum,
the method comprising said steps (i) and (ii) wherein the drum of the press represents said container.

This method variant is advantageous because it takes advantage of the existing solidity of the pressing drum, which can withstand depressurization well.

Preferably, steps (i) and (ii) take place before - or only before - pressing of the vegetable mass by means of the membrane.

In a preferred variant, during the entire pressing step, i.e. the inflation of the membrane(s), step (ii) is carried out for the entire time in which the membrane(s) exert(s) pressure on the vegetable mass, while during the deflation step of the membrane(s), step (i) is carried out with external gas in order to compensate for the mechanical vacuum that would be created in the cylinder due to the retraction of the membrane.

Another aspect of the invention is an apparatus for processing a vegetable mass comprising:
- a container to contain a vegetable mass,
- means for injecting an inert gas into the container, and for increasing the atmospheric pressure inside the container bringing it to a first pressure value, said means being configured to involve and permeate the entire vegetable mass so that the inert gas invades interstices of the vegetable mass and dilutes the oxygen present in the interstices, and
- means for decreasing the atmospheric pressure inside the container bringing it to a second pressure value lower than the first value, said means being configured to extract from the container a mixture of inert gas and oxygen thereby removing oxygen from the vegetable mass.

A variant of the apparatus is a press for pressing a vegetable mass, wherein the container for containing the vegetable mass is the drum of the press.

Preferably the press comprises:
- a filtering septum for extracting liquid from the vegetable mass which is installed inside the drum,
   provided with a perforated surface for sifting the vegetable mass, and
   fluidly connected to the outside of the drum to transport liquid/juice extracted from the vegetable mass to the outside of the drum,
- means, e.g. mounted inside the drum, for pushing the vegetable mass against the filtering septum and extracting liquid from the vegetable mass by pushing it out of the drum,
- means for carrying out steps (i) and (ii), preferably cyclically.

Said means for pushing may be e.g.
a membrane, mounted on the inner wall of the drum, which is inflatable to press (and preferably also move) the vegetable mass against the filtering septum, and/or
a plate driven by a piston.

Preferably the press is provided with two membranes, each occupying at least 35% of the internal surface of the drum; or with a single membrane occupying at least 70% of the internal surface of the drum.

The invention is applicable e.g. to three types of closed press:
1) a press provided with a membrane that occupies about half of the internal surface of the drum while the other half is occupied by the filtering septum fixed on the internal surface of the drum. The membrane is mounted on an internal wall of the drum, where the membrane is fixed; the filtering septum is mounted on the internal wall of the cylinder opposite to that of the membrane. The membrane, by inflating during the pressing step, pushes the vegetable mass towards the filtering septum;
2) a press provided with a central elastic membrane, positioned along the axis of the drum, which presses the vegetable mass from the center towards an internal wall of the drum where the filtering septum is arranged;
3) a press provided with two membranes (or a single membrane that occupies almost the entire internal surface) that each occupy approximately half of the internal surface of the cylinder, while the filtering septum is central, fixed and orthogonal to the rotation axis of the drum, or is movable and rotating. The two membranes, by inflating, press the vegetable mass towards the center of the drum, against the filtering septum.

Preferably one or each inflatable membrane is mounted to push and also displace the vegetable mass against the filtering septum, the filtering septum being mounted inside the drum opposite and spaced apart from the membrane.

In the method, the press shares one or each of the features defined herein for the press according to the invention, and vice versa.

In general, as preferred variants, alone or in combination:
- the filtering septum may be mounted fixed or movable inside the drum;
- the shape of the container or drum is not essential, it could be for example a cylinder or a parallelepiped. It is sufficient that the container or the drum is pressure-tight and depressurization-tight;
- the inert gas is CO₂, which can easily pass into solution and also return to the gaseous phase, taking with it any oxygen trapped in the vegetable mass. The inert gas may also be nitrogen, which has more difficulty than CO₂ to pass into solution;
- the above methods work well even with a vegetable that is little or not pressed at all, in particular whole grapes. Since thanks to the method of the invention the inert gas can pass inside the vegetable mass as if it were a sponge, step (ii) allows to extract part of the air from inside the vegetable mass, the interstices between grapes for example, which is replaced by the inert gas in step (i);
- step (i) may be performed by a pump or by connecting the internal volume of the container to a tank of inert gas maintained at a pressure higher than atmospheric pressure or the first value, the flow of inert gas being generated thanks to the pressure differential between the inside of the container and the tank of inert gas;
- step (ii) may be performed by a pump or by connecting the internal volume of said container to a volume maintained at a pressure lower than atmospheric pressure or the second value, the flow of extracted gas being generated thanks to the pressure differential between the inside of the container and such volume;
- as an optimization, step (ii) is performed by the same means (e.g. a blower) used to deflate the pressing membrane;
- to maximize oxygen extraction and the involvement of the vegetable mass, the inert gas is injected into a point of the container, for example at the axial loading area or in correspondence with must drainage channels by means of a pipe communicating the drainage channels with a must collection tank, and it is extracted from a point on the opposite side of the container;
- the gas is extracted from the must drain valves of the press or from a gas discharge valve placed on a must collection tank or from the same pump that creates the vacuum for the membrane,
- the inert gas is injected into a first point of the container and extracted from a second point of the container, where the first and second points are preferably on opposite sides of the container;
- the membrane is mounted in the drum so as to hermetically divide the internal volume of the drum into a first internal volume, configured to contain a gas to inflate or deflate the membrane, and a second internal volume of the drum occupied/occupiable by the vegetable mass, wherein
   step (ii) is performed using the same means, e.g. a blower, used to deflate the membrane (i.e. to extract gas from the first internal volume). In particular, such means, via a flow-diverting system (e.g. the valves 70 and 72 in the following description), is used to suck the gas from the second internal volume, i.e. the one occupied by the vegetable mass, while the first internal volume remains hermetic;
- the liquid extracted from the container is collected in an auxiliary tank, and step (i) occurs by injecting inert gas into the auxiliary tank;
- the liquid extracted from the container is collected in an auxiliary tank, and step (ii) occurs by extracting inert gas from the auxiliary tank.

Further advantages will become clear from the following description, which refers to examples of preferred embodiments of a pneumatic press in which:

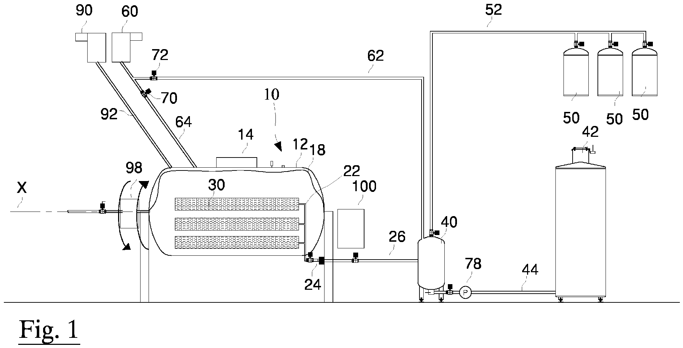

- fig. 1 shows a side view of a press;
- fig. 2 shows a side view of the press in fig. 1 in a first operating configuration;
- fig. 3 shows a side view of the press in fig. 1 in a second operating configuration. Equal numbers in the figures indicate equal or substantially equal parts.

A pneumatic press 10 serves to press a vegetable mass 200, and comprises a drum 12, preferably rotatable about its central horizontal axis X, e.g. by means of a motor 98. In the external lateral surface of the drum 12 there is a hatch 14 for loading/unloading the vegetable mass 200 and an outlet 24 for the liquid extracted from the vegetable mass 200.

The outlet 24 is fed by a channel 22, internal or external to the drum 12, which is connected to a filtering septum 30 mounted inside the drum 12. On an internal wall of the drum 12 opposite the septum 30 is mounted a known pressing membrane 18. In known manner the membrane 18 is inflatable to press the vegetable mass 200 against the septum 30.

In particular, the system comprises a blower 60, which is fluidly connected to the drum 12 via a duct 64 and a valve 70 to regulate the flow in the duct 64.

The blower 60 is adapted to extract a gas from a first volume inside the drum 12 so as to deflate the membrane 18.

In particular, the system also comprises a compressor 90 which is connected to the first volume of the drum 12 via a duct 92 and is adapted to inject a gas into the first volume to inflate the membrane 18.

The outlet 24 is fluidly connected to a tank 40 via a conduit 26 to collect the liquid extracted during the pressing of the vegetable mass 200.

The tank 40 is preferably fluidly connected, via a conduit 44, to a larger tank 42 for the storage of the liquid, most preferably through the action of a pump 78 installed in the conduit 44. The pump 78 will preferably operate automatically to empty the tank 40 according to level sensors installed in the tank 42.

The tank 40 is connected to the blower 60 upstream of the valve 70 via a conduit 62 and a valve 72 to regulate the flow in the conduit 62.

A conduit 52 also flows into tank 40 and is connected to one or more tanks 50 of inert gas.

### OPERATION

The drum 12 is loaded with the vegetable mass 200, e.g. grapes or crushed grapes or marc. In the static loading phase, for example carried out through an axial-loading valve, the drum 12 does not rotate and a vent valve positioned in the upper part of the drum 12 maintains its internal pressure at the room pressure value of zero relative bar.

Now the membrane 18 is not inflated, so there is no pressure inside the drum 12 and no pressure is applied on the vegetable mass 200.

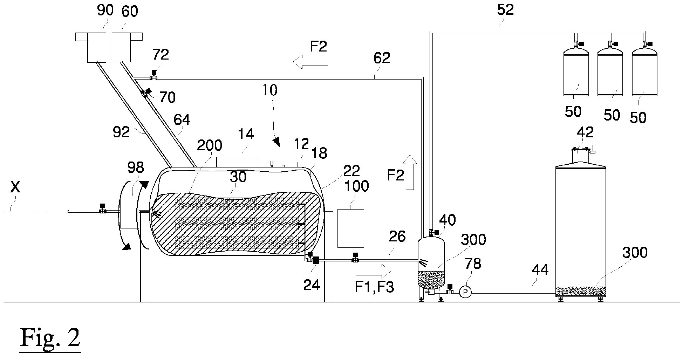

Some liquid 300, e.g. must, can exit by gravity from the outlet 24 (see arrow F1 in fig. 2). The liquid 300 extracted from the drum 12 is collected in the tank 40 and preferably re-launched, via the pump 78, into the tank 42.

With the valve 70 closed, the valve 72 open and the vent valve closed, the blower 60 is activated (fig. 2) to operate with suction. A flow of gas is then generated towards the blower 60, sucked from the tank 40 through the duct 62 (see arrows F2). The tank 40 is depressurized and consequently a flow of gas mixed with must is sucked from the drum 12 which ends up in the tank 40 through the duct 26 (see arrow F3) while the sucked gas goes towards the blower 60. Therefore, due to the physics of fluids (gases and liquids), the drum 12 is also depressurized; for example, the pressure inside the drum 12 and the tank 40 becomes lower than atmospheric pressure, for example, it is -300 mbar. A portion of the oxygen trapped in the interstices of the vegetable mass 200 mixes with the gas in the tank 12 and is then sucked by the blower 60 into the ducts 26 and 62.

The depression not only reduces the amount of air/oxygen present both in the vegetable mass 200 and in the empty and unfilled part of the drum 12, but also facilitates the draining of the liquid and speeds up the initial draining/pressing operations. In this phase the liquid continues to descend both by gravity in the duct 26 towards the tank 40 and by the effect of the low-pressure condition generated by the action of the blower 60.

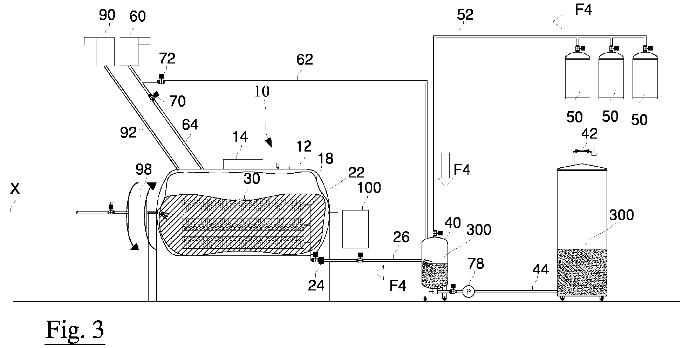

Then (fig. 3) the blower 60 is blocked, the valve 70 is closed (the valve 72 being already closed) and inert gas, taken from the tanks 50, is injected under pressure into the tank 40, see arrow F4. Then the inert gas flows through the duct 26, enters the drum 12 and pressurizes both the vegetable mass 200 and the remaining empty part of the internal volume of the drum 12. The vegetable mass 200 is subjected to pressure by the inert gas, which will begin to penetrate the vegetable mass 200 and invade the interstices present in its volume (the vegetable mass 200 behaves like a sponge). The gas in the interstices of the mass 200 mixes with the residual oxygen present therein. After a certain time, sufficient to complete or at least establish the inert gas absorption process, the system returns to the previous step, which involves the activation of the blower 60 to expel gas from the drum 12. The new depressurization created inside the drum 12 and the tank 40 has the effect of drawing the gas that is in the interstices of the mass 200. This gas is now a mixture of oxygen and the previously injected inert gas, so that its expulsion from the tank 12 involves a percentage decrease in the oxygen contained in the tank 12.

The pressurization and depressurization steps may follow one another for a certain number of cycles, to reach a desired minimum of oxygen inside the drum 12.

The steps are preferably repeated for the entire filling and draining time of the press.

Once the filling and draining steps of the press as described above have been completed, the pressing step of the vegetable mass 200 will begin via the membrane 18.

After pressing, inert gas is injected through the tank 40 during the deflation step of the membrane 18.

The operating steps of the press 10 are preferably coordinated by a PLC or computer 100.

The press may have more than one membrane 18.

The above pressure and gas exchange cycles may be performed on the vegetable mass contained in a generic tank, not necessarily a press.

## Claims

1. Deoxidation method performed on a vegetable mass contained in a container, with the steps of
(i) injecting an inert gas into the container while preventing the inert gas from coming out of the container, so that the inert gas increases the gaseous pressure inside the container, bringing it to a first pressure value;
(ii) decreasing the gaseous pressure inside the container bringing it to a second pressure value lower than the first value by extracting a mixture of inert gas and air from the container and thus removing oxygen from the vegetable mass.

2. Method according to claim 1, wherein step (i) and (ii) follow one another, alternating cyclically a certain number of times.

3. Method according to claim 1 or 2, wherein the second value is such as to induce a negative pressure with respect to the ambient atmospheric pressure inside the container.

4. Method according to any previous claim, wherein liquid is extracted from the vegetable mass contained in the container by collecting it in an auxiliary tank, and step (i) is performed by injecting inert gas into the auxiliary tank.

5. Method according to any previous claim, wherein liquid is extracted from the vegetable mass contained in the container by collecting it in an auxiliary tank, and step (ii) is performed by extracting inert gas from the auxiliary tank.

6. Method according to any preceding claim, wherein step (i) is performed after step (ii).

7. Method according to any preceding claim, wherein said container is the pressing drum of a pneumatic press.

8. Method according to claim 7, wherein the press comprises means for pressing the vegetable mass and steps (i) and (ii) are performed before - or only before - the activation of the pressing means.

9. Method according to claim 6 or 7, wherein the press comprises
an inflatable membrane to press the vegetable mass, and
a means for deflating the membrane,
and step (ii) is performed by the means for deflating the membrane.

10. Press for pressing a vegetable mass comprising:
- a drum for containing a vegetable mass,
- a filtering septum for extracting liquid from the vegetable mass that is installed inside the drum,
equipped with a perforated surface for sifting the vegetable mass, and
fluidly connected with the outside of the drum to transport liquid/juice extracted from the vegetable mass to the outside of the drum,
- means for pushing the vegetable mass against the filtering septum and extracting liquid from the vegetable mass pushing it outside the drum,
- means for carrying out steps (i) and (ii) of the method according to any of the previous claims.
